Europäisches Patentamt

European Patent Office

Office européen des brevets

(19)

(11) **EP 1 382 550 A1**

(12) **EUROPEAN PATENT APPLICATION**

(43) Date of publication:
**21.01.2004 Bulletin 2004/04**

(51) Int Cl.$^7$: **B65F 1/00**

(21) Application number: **02425767.7**

(22) Date of filing: **12.12.2002**

| | |
|---|---|
| (84) Designated Contracting States:<br>**AT BE BG CH CY CZ DE DK EE ES FI FR GB GR IE IT LI LU MC NL PT SE SI SK TR**<br>Designated Extension States:<br>**AL LT LV MK RO** | (71) Applicant: **Pigliapoco Giuseppe**<br>**Macerata (IT)** |
| (30) Priority: **02.01.2002 IT MC20020001** | (72) Inventor: **Pigliapoco Giuseppe**<br>**Macerata (IT)** |

(54) **Device for separate collecting of solid urban refuse**

(57) The device is composed of 5 forms, also independent, where the dampness, glass, paper, plastics and cans of the various dimensions are inserted according to the various commercial demands; on the inferior side five compartments are displaced where every material can separately be drawn out, compacted for being commercialized. Inside every form, a process of decomposition is established for titration and compression of every single disposed material.

EP 1 382 550 A1

**Description**

**DESCRIPTION TEXT**

After completing searches on Internet and visited fairs, it has not happened to know that an appliance has ever been invented, however simple, to use for the collection and the separation and therefore for the disposal, already in the house, of the urban solid refusals.

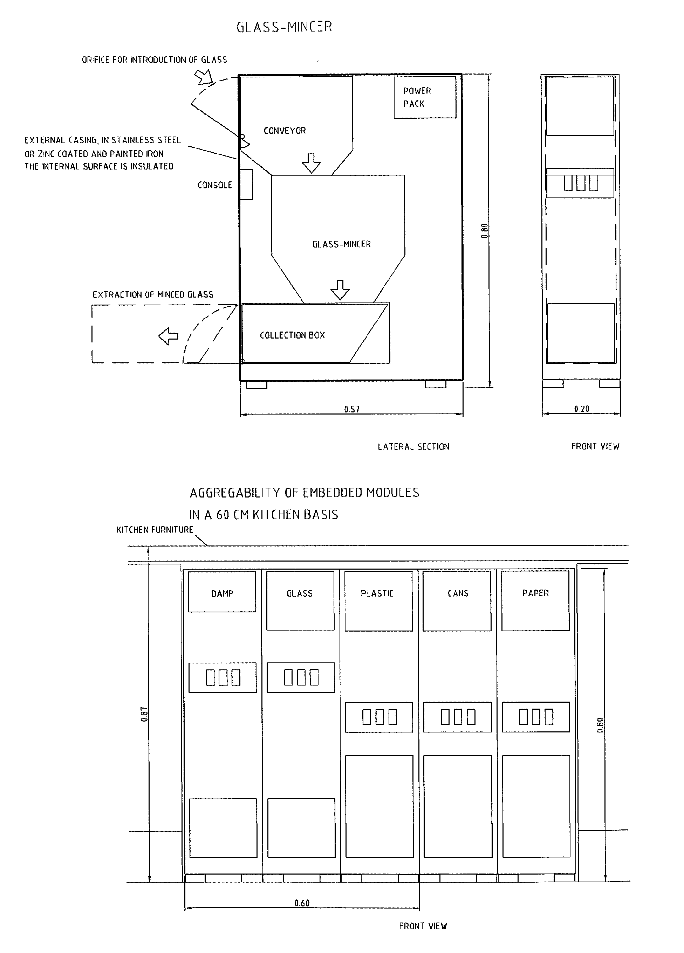

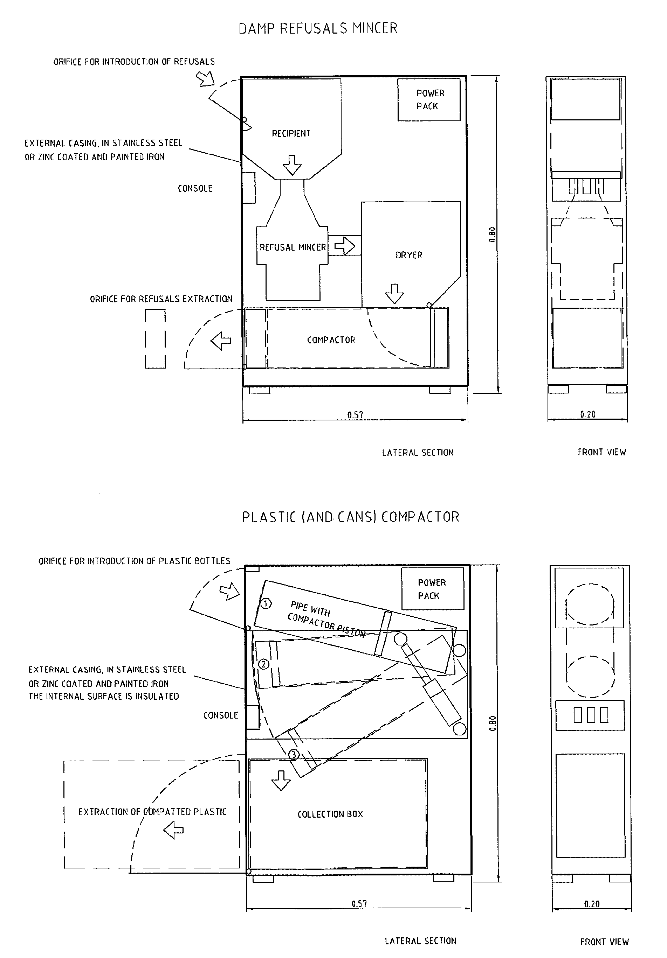

The appliance so defined, which is composed by several independent modules, can have the various dimensions, dependently if it is used in a family or in a restaurant or in a hotel, and therefore its structures or its single forms can be suitable to the single demands (ref. plate n° 2, fig. n° 4). It can be devised as embedded in a sectional kitchen.

It is normally composed of five independent forms (but they can be devised also dependent from the same mechanism), in which it will be the treatment of the dampness, of the glass, of the paper, of the plastics and of the cans (ref. plate n° 2, fig. n° 4).

Every single material will be inserted in every special loophole to disappearance on the front-superior (if embedded in a sectional kitchen) or superior side.

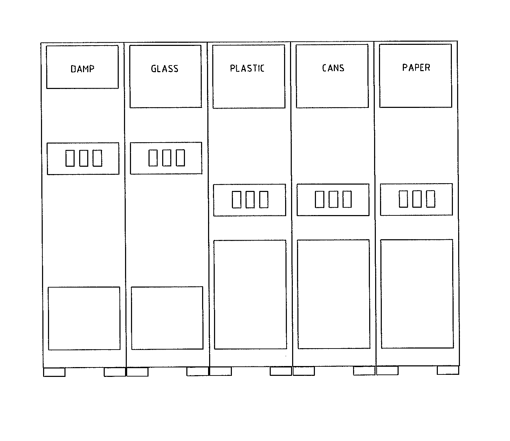

1) The <u>dampness</u> will fall in a crushing device and from here it will be dragged in a drier and, according to the location of the appliance, they will fall directly in the exhaust or in the inferior recipient which is covered by plastic (ref. plate n° 1, fig. n° 1).

During the extraction of the recipient, a rectangular pad as a parallelepiped will result.

2) The <u>glass</u> will be grinded and compressed in the inferior recipient where a plastic wrap of different color is set already.

To the extraction of the recipient a bag will appear equally sealed having the form of a rectangular parallelepiped (ref. plate n° 2, fig. n° 3).

3) The <u>plastics</u> will be grinded and collected in the inferior recipient where, in a similar way, during the extraction a sealed bag of other color will appear (Fig. 1).

4) The <u>cans</u> will be compressed and they will fall in the usual recipient that will be extracted for recovering the sealed bag (ref. plate n° 1, fig. n° 2).

5) The <u>paper</u> inserted in the admission port will be grinded and pressed; from the inferior recipient a bag of sealed <u>cardboard</u> will appear (Fig. 4).

The recovery method of the materials, by previous trituration and compression, can use the more varied mechanical and electronic applications.

It appears evident that the aforesaid invention will allow eliminating the serious problems of disposal of the urban solid refusals to which our society succeeds in facing with a lot of difficulties and expenditure of money.

The refusals that will be transferred to dump will be well little thing in comparison to today's massive structure, with great environmental and economic advantages both for the State (or the States and the Territorial Authorities), both for the single families.

Concerning the "damp", it must be said that they, grinded once and dried, they will be of notably inferior volume in comparison to the actual one; when they were also envoys in dump (and they were not used for other purposes), they doesn't require particular treatments for their degradability.

A bag of more resistant paper could be used to be putted in recipient, and there would not be then problems of treatment.

It appears evident that the industry will also have to adjust above all the packaging of paper material, in order to recover it more easily.

The mechanisms of triturating and compressing have been studied for the single forms even if, to the state, for some forms they are used the mechanisms that are already in commerce.

After a technical study in more depth, it has been believed that the treatment of the refusal in the respective recipients (dampness, glass, paper, plastics and cans), which on their turn can be disposed by following a different order, it is more convenient and economical if depending from the same mechanism:

An electromotor activates, by adopting an appropriate step-down gear, a small shaft that transversally crosses the singles recipients and that, along its axis, presents different sections and different rotating mechanisms inducing the trituration also by crushing against the walls of the separate recipient (or module).

The standard or general calculation of the adopted small shaft is enclosed.

The electronics that is used it constitutes a particular chapter, that is in progress of further examinations.

## CALCULATION OF THE SMALL SHAFT OF UTILIZATION

Available data:

- Electromotor power: $\qquad$ W = 1 CV;
- Speed of rotation of the small shaft: $N_m$ = 1.400 rpm;
- Reducer to be adopted: $\qquad$ 1:23

Requested data:

1) Turning moment of the small shaft of utilization;
2) Diameter of the small shaft of utilization.

Solution

1) Turning moment $\mathbf{M_t}$ of the small shaft of utilization

The turning moment $\mathbf{M_t}$ is calculated, usually (R. Giovannozzi, Costruzioni di Macchine, Ed. Patron, Bologna, 1971, vol. 1) related to the power W to be transmitted, and to the speed of rotat ion (rpm) of the small shaft $N_u$ by using the relation:

$$M_t = \frac{75 \cdot W}{\omega} = \frac{75 \cdot W}{\frac{2\pi \cdot N_u}{60}} = 716,2 \cdot \frac{W}{N_u} [\text{kgm}] \text{ (W is expressed in CV)}$$

In our case, it is:

$$N_u = 1400/23 \cong 60,870 \text{ rpm.}$$

Consequently, the turning moment $\mathbf{M_t}$ of the small shaft of utilization is:

$$M_t = 716,2 \cdot \frac{W}{N_u} = 716,2 \cdot \frac{1}{60,870} = 11,766 \text{ Kgm} = 11.766 \text{ Kgmm} = M_t$$

2) Diameter $\mathbf{d}$ of the small shaft of utilization

By considering a solid shaft that is prevalently subjected to torsional stress, the following relation can be used (R. Giovannozzi, Costruzioni di Macchine, Ed. Patron, Bologna, 1971, vol. 1):

$$(*) \ \tau = \frac{16 \cdot M}{\pi \cdot d^3} \leq \tau_{am}$$

By following the hypothesis of Von Mises (distortion energy), the material collapses when:

$$\tau_{amm} \cdot \sqrt{3} = \sigma_{amm}$$

in which:

$$\sigma_{amm} = \frac{\sigma_R}{c}$$

where c is a safety factor that, in the case of shafts, is equal to 5.

Considering C40 or C50 steels, having an ultimate tensile strength $\sigma_R = 60 \div 70$ Kg/mm$^2$, we can obtain:

$$\sigma_{amm} = \frac{70}{5} = 14 \text{ Kg/mm}^2$$

and, consequently:

$$\tau_{amm} = \frac{14}{\sqrt{3}} = 8,0829 \text{ Kg/mm}^2 \text{ (max. unit strength)}$$

The minimum diameter **d$_{min}$** of the small shaft of utilization is obtained by adopting the (*):

$$d_{min} = \sqrt[3]{\frac{5 \cdot M_t}{\tau_{amm}}} = \sqrt[3]{\frac{5 \cdot 11.766}{8,0829}} = \textbf{19,37955 mm} = \textbf{d}_{\textbf{min}}.$$

Finally, the requested diameter d must be greater than d$_{min}$.


**Claims**

1.    Avv. Giuseppe Pigliapoco demands the ownership of the invention or the model of utility to have contrived a new, more profit and more economic system of disposal of the urban solid refusals:

     a) through the separation of them in separate forms (dampness, glass, paper, plastics, cans) already near the residences or the business;
     b) through the recovery and the possibility of marketing of the same;
     c) through a mechanism that is constituted by an electromotor which, through an appropriate reduction, it activates a small shaft transversally placed with respect to the domestic appliance, which shaft, on its turn, is divided in sectors according to the recipients or modules. Different apparatus or mechanisms are placed on the small shaft axis, which are conducive to the trituration also by compression on the walls of the same modulus where the single refusal is treated. After that, every type of refusal is placed in the appropriate recipients, as in the description.

## GLASS-MINCER

ORIFICE FOR INTRODUCTION OF GLASS

POWER PACK

CONVEYOR

EXTERNAL CASING, IN STAINLESS STEEL
OR ZINC COATED AND PAINTED IRON
THE INTERNAL SURFACE IS INSULATED

CONSOLE

GLASS-MINCER

0.80

EXTRACTION OF MINCED GLASS

COLLECTION BOX

0.57

0.20

LATERAL SECTION

FRONT VIEW

## AGGREGABILITY OF EMBEDDED MODULES
## IN A 60 CM KITCHEN BASIS

KITCHEN FURNITURE

| DAMP | GLASS | PLASTIC | CANS | PAPER |

0.87

0.80

0.60

FRONT VIEW

## DAMP REFUSALS MINCER

LATERAL SECTION

FRONT VIEW

## PLASTIC (AND CANS) COMPACTOR

LATERAL SECTION

FRONT VIEW

7

EP 1 382 550 A1

**European Patent Office**

# EUROPEAN SEARCH REPORT

Application Number

EP 02 42 5767

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | FR 2 698 024 A (J. ROUGEMONT) 20 May 1994 (1994-05-20) * the whole document * | 1 | B65F1/00 |
| X | WO 97 16362 A (G. IUCOLANO) 9 May 1997 (1997-05-09) * the whole document * | 1 | |
| X | EP 1 074 486 A (C. TURATTI) 7 February 2001 (2001-02-07) * the whole document * | 1 | |
| X | DE 44 07 600 A (UBIB UNTERNEHMENSBERATUNGS GMBH) 14 September 1995 (1995-09-14) * the whole document * | 1 | |
| X | DE 43 40 857 A (UBIB UNTERNEHMENSBERATUNGS GMBH) 8 June 1995 (1995-06-08) * the whole document * | 1 | |
| | | | **TECHNICAL FIELDS SEARCHED (Int.Cl.7)** |
| | | | B65F |

The present search report has been drawn up for all claims

| Place of search | Date of completion of the search | Examiner |
|---|---|---|
| THE HAGUE | 20 October 2003 | Smolders, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

8

**ANNEX TO THE EUROPEAN SEARCH REPORT
ON EUROPEAN PATENT APPLICATION NO.**

EP 02 42 5767

This annex lists the patent family members relating to the patent documents cited in the above-mentioned European search report.
The members are as contained in the European Patent Office EDP file on
The European Patent Office is in no way liable for these particulars which are merely given for the purpose of information.

20-10-2003

| Patent document cited in search report | | Publication date | Patent family member(s) | | Publication date |
|---|---|---|---|---|---|
| FR 2698024 | A | 20-05-1994 | FR | 2698023 A1 | 20-05-1994 |
| | | | FR | 2698024 A1 | 20-05-1994 |
| | | | EP | 0600808 A1 | 08-06-1994 |
| WO 9716362 | A | 09-05-1997 | IT | MI952253 A1 | 30-04-1997 |
| | | | AT | 188667 T | 15-01-2000 |
| | | | AU | 713155 B2 | 25-11-1999 |
| | | | AU | 4952996 A | 22-05-1997 |
| | | | BR | 9611708 A | 23-02-1999 |
| | | | CA | 2236217 A1 | 09-05-1997 |
| | | | DE | 69606191 D1 | 17-02-2000 |
| | | | EP | 0858421 A1 | 19-08-1998 |
| | | | WO | 9716362 A1 | 09-05-1997 |
| EP 1074486 | A | 07-02-2001 | IT | MO990172 A1 | 05-02-2001 |
| | | | EP | 1074486 A1 | 07-02-2001 |
| DE 4407600 | A | 14-09-1995 | DE | 4407600 A1 | 14-09-1995 |
| | | | AT | 184253 T | 15-09-1999 |
| | | | AU | 1945095 A | 25-09-1995 |
| | | | WO | 9524349 A1 | 14-09-1995 |
| | | | DE | 59506778 D1 | 14-10-1999 |
| | | | EP | 0710211 A1 | 08-05-1996 |
| DE 4340857 | A | 08-06-1995 | DE | 4340857 A1 | 08-06-1995 |
| | | | AU | 1062295 A | 19-06-1995 |
| | | | WO | 9515223 A1 | 08-06-1995 |

EPO FORM P0459

For more details about this annex : see Official Journal of the European Patent Office, No. 12/82